# EUROPÄISCHE PATENTANMELDUNG

(11) **EP 4 822 406 A1**
(43) Veröffentlichungstag der Anmeldung: **14.10.2026**
(21) Anmeldenummer: 26170400.1
(22) Anmeldetag: 02.04.2026
(51) Int. Cl.: G01V 11/00, G01V 3/08, G01V 3/26

(54) **VERFAHREN UND SYSTEM ZUM DETEKTIEREN VON VERDACHTSOBJEKTEN IN EINEM BODEN**

(30) Priorität: 07.04.2025 DE 102025113530
(71) Anmelder: Eggers Kampfmittelbergung GmbH, 20539 Hamburg (DE)
(72) Erfinder: Marquardt, Kevin, 21339 Lüneburg (DE)
(74) Vertreter: Eisenführ Speiser

(57) **Zusammenfassung**

Die Erfindung betrifft ein Verfahren und ein System zum Detektieren von Verdachtsobjekten, insbesondere von Kampfmitteln, in einem Boden. Das Verfahren (100) umfasst: Erzeugen (110) von mindestens drei Sondierungsbohrungen in einem Boden; Durchführen (120) mindestens einer Messung innerhalb der Sondierungsbohrungen mittels eines Sensors; Erzeugen (130) von Messdaten anhand der durchgeführten Messungen; Analysieren (140) der Messdaten mittels eines auf Basis eines Trainings-Datensatzes trainierten Algorithmus zur Kategorisierung eines von den Sondierungsbohrungen aufgespannten Bereichs des Bodens; Kategorisieren (150) des aufgespannten Bereichs in Abhängigkeit von den Messdaten mittels des Algorithmus in eine von mindestens zwei Kategorien, umfassend eine erste Kategorie, nach welcher die Messdaten darauf hindeuten, dass kein Verdachtsobjekt vorhanden ist und eine zweite Kategorie, nach welcher die Messdaten darauf hindeuten, dass ein Verdachtsobjekt vorhanden ist; Durchführen (160) weiterführender Untersuchungen, um festzustellen, ob ein Verdachtsobjekt im aufgespannten Bereich vorhanden ist, wenn der von den Sondierungsbohrungen aufgespannte Bereich nicht in die erste Kategorie kategorisiert wurde.

## Beschreibung

Die Erfindung betrifft ein Verfahren zum Detektieren von Verdachtsobjekten, insbesondere von Kampfmitteln, in einem Boden. Ferner betrifft die Erfindung ein System zum Detektieren von Verdachtsobjekten, insbesondere Kampfmitteln, in einem Boden.

Für die Suche nach Kampfmitteln können klassische Verfahren zur Kampfmittelsondierung durchgeführt werden. Kampfmittel können insbesondere nicht detonierte Kampfmittel, wie Sprengbomben, Munition oder jegliche Arten von Kriegsaltlasten sein. Wenn solche Kampfmittel mittels einer Kampfmittelsondierung aufgefunden werden, können diese im Rahmen der Kampfmittelbeseitigung geborgen und entfernt werden.

Zur Detektion von Verdachtsobjekten, insbesondere Kampfmitteln, in einem Boden werden typischerweise mithilfe von Bohrgeräten Bohrungen, sogenannte Sondierungsbohrungen, in dem Boden erzeugt. Nach dem Erzeugen einer solchen Bohrung wird in diese Bohrung üblicherweise ein Sondierrohr eingebracht. Anschließend können dann mittels Messgeräten, die durch das Sondierrohr geführt werden, Messungen durchgeführt werden.

Um ein Verdachtsobjekt erfolgreich detektieren zu können, sind ein ausreichender Eigenschaftskontrast zwischen dem Verdachtsobjekt und seiner Umgebung und ein ausreichendes Signal-Rausch-Verhältnis erforderlich. Das bedeutet, dass das vom Verdachtsobjekt erzeugte Signal ausreichend größer sein muss, als eventuell vorhandene Störsignale und andere artefaktische Signale am Ort der Messung, um es detektieren zu können.

Ein solcher Eigenschaftskontrast, z.B. in physikalischen Eigenschaften, zwischen Kampfmitteln, wie insbesondere Bombenblindgängern, und dem das Kampfmittel umgebenden Boden besteht insbesondere in der Magnetisierbarkeit. Da Kampfmittel wie Bombenblindgänger typischerweise Stahl umfassen, weisen sie normalerweise eine wesentlich höhere Magnetisierbarkeit und einen wesentlich höheren Eigenmagnetismus auf als der sie umgebende Boden. Daher werden üblicherweise Magnetometer für die Detektion von Bombenblindgängern verwendet.

Ein Problem bei der Detektion von Verdachtsobjekten wie Bombenblindgängern liegt allerdings darin, dass in vielen Böden, beispielsweise in Siedlungsgebieten oder auf ehemalig militärisch genutzten Flächen, die Messungen durch ein relativ starkes magnetisches Hintergrundrauschen beeinträchtigt werden, oben auch als artefaktisches Signal bezeichnet. Ein Hintergrundrauschen tritt bei jedem messtechnischen Vorgang mehr oder weniger stark auf. Unter einem Hintergrundrauschen sind insbesondere Störgrößen zu verstehen, die das Nutzsignal einer Messung überlagern und beeinträchtigen. Ein solches Hintergrundrauschen kann unterschiedliche Ursachen haben, wie beispielsweise Ablagerungen mit ferromagnetischen Anteilen, beispielsweise in Form von Siedlungsschichten, Trümmerschutt, Bauschutt, industrielle Schlacken, Haus- und Gewerbeabfälle, oder externe, elektromagnetische Störquellen, wie Funksender, Oberleitungen, große bewegte magnetische Körper, Schaltung von Leistungen in elektrischen Anlagen.

Der Bohrlochabstand zwischen benachbarten Sondierungsbohrungen kann umso größer gewählt sein, je geringer das Hintergrundrauschen ist und je größer die gesuchten Verdachtsobjekte und das daraus resultierende Nutzsignal ist. Grundlegende Berechnungsformeln zur Bestimmung des geeigneten Bohrlochabstands wurden beispielsweise von Wegener und Fleischmann im Artikel "Ortung tiefliegender Bombenblindgänger", Zeitschrift für angewandte Physik, 6.3 (1954), S. 120-127 beschreiben. Darin wird beschrieben, wie eine Bestimmung von Rauschsignalen für Messungen in Sondierungsbohrungen erfolgen kann. Diese grundlegenden Berechnungsformeln zur Bestimmung des Bohrlochabstandes sind auch Grundlage aktueller Bestimmungen, beispielsweise der Hansestadt Hamburg, wie beschrieben in der TA-KRD Hamburg 2017 (Technische Anweisung für die Durchführung von Aufgaben des systematischen Absuchens und dem Freilegen von Verdachtsobjekten/Kampfmitteln, Freie und Hansestadt Hamburg, Feuerwehr, Kampfmittelräumdienst Hamburg).

Die Abstände zwischen den Bohrlöchern, und damit das Bohrlochraster, sind in der Regel so anzulegen, dass in Abhängigkeit von dem lokalen Signal-Rausch-Verhältnis eine Überlappung der von Detektionsradien definierten Kreise von zwei benachbarten Bohrlöchern gewährleistet ist. In der Regel wird dies erreicht, wenn der Abstand zwischen zwei beliebigen benachbarten Bohrlöchern einen Abstand von 1,5 m nicht überschreitet. Allerdings kann es, insbesondere in Bereichen, in denen ein relativ starkes Hintergrundrauschen vorhanden ist, erforderlich sein, die Abstände zwischen den Bohrlöchern, zumindest lokal, zu reduzieren, um eine Überlappung der von Detektionsradien definierten Kreise gewährleisten zu können.

Der gewählte Bohrlochabstand zwischen benachbarten Sondierungsbohrungen muss daher überprüft und gegebenenfalls angepasst werden, um eine Überlappung - und damit eine zuverlässige und lückenlose Detektion von Verdachtsobjekten - zu gewährleisten. Eine solche Überprüfung und Anpassung des Bohrlochabstandes ist allerdings relativ aufwendig. Zum einen ist die Auswertung an sich typischerweise mit einem relativ hohen Aufwand verbunden. Zum anderen ist der Prozess, bei dem nach dem Erstellen der Bohrlöcher und Auswerten der Messdaten analysiert wird, ob der gewählte Abstand zwischen den Bohrlöchern ausreichend war, um die gesamte Fläche lückenlos abzudecken, mit einem relativ hohen Aufwand verbunden. An bestimmten Stellen, an denen eine Abdeckung, also eine Überlappung der von den Detektionsradien definierten Kreise, nicht gegeben ist, werden bei diesem Verfahren nachträglich weitere Sondierungsbohrungen erzeugt, um auch an diesen Stellen eine ausreichende Abdeckung zu erzielen.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, mittels welcher eine zuverlässige Detektion von Verdachtsobjekten, insbesondere Kampfmitteln, in einem Boden mit geringerem Aufwand, insbesondere geringerem Zeitaufwand, ermöglicht wird.

Gemäß einem ersten Aspekt wird diese Aufgabe gelöst durch ein Verfahren zum Detektieren von Verdachtsobjekten, insbesondere von Kampfmitteln, in einem Boden mit den Merkmalen des Anspruchs 1. Danach ist vorgesehen, dass das Verfahren umfasst: Erzeugen von mindestens drei, insbesondere genau drei, voneinander beabstandeten Sondierungsbohrungen in einem Boden, wobei die mindestens drei Sondierungsbohrungen eine Bohrungsanordnung, vorzugsweise ein Bohrlochtripel, bilden, wobei vorzugsweise die mindestens drei Sondierungsbohrungen der Bohrungsanordnung jeweils eine Sondierungsbohrungsachse aufweisen, die parallel zueinander angeordnet sind und/oder vertikal ausgerichtet sind; Durchführen mindestens einer physikalischen Messung innerhalb jeder der mindestens drei Sondierungsbohrungen der Bohrungsanordnung mittels mindestens eines Sensors; Erzeugen von Messdaten anhand der durchgeführten mindestens einen physikalischen Messung für jede der mindestens drei Sondierungsbohrungen der Bohrungsanordnung; Analysieren der Messdaten, die der Bohrungsanordnung zugeordnet sind, mittels eines auf Basis eines Trainings-Datensatzes trainierten Algorithmus zur Kategorisierung eines von den Sondierungsbohrungen der Bohrungsanordnung aufgespannten Bereichs des Bodens; Kategorisieren des von den Sondierungsbohrungen der Bohrungsanordnung aufgespannten Bereichs des Bodens in Abhängigkeit von den der Bohrungsanordnung zugeordneten Messdaten mittels des Algorithmus in eine von mindestens zwei Kategorien, wobei die mindestens zwei Kategorien umfassen: eine erste Kategorie, nach welcher die Messdaten darauf hindeuten, dass kein Verdachtsobjekt im von den Sondierungsbohrungen der Bohrungsanordnung aufgespannten Bereich des Bodens vorhanden ist; eine zweite Kategorie, nach welcher die Messdaten darauf hindeuten, dass ein Verdachtsobjekt von den Sondierungsbohrungen der Bohrungsanordnung aufgespannten Bereich des Bodens vorhanden ist; Durchführen weiterführender Untersuchungen, um festzustellen, ob ein Verdachtsobjekt im Bereich der Bohrungsanordnung, insbesondere in dem von den Sondierungsbohrungen der Bohrungsanordnung aufgespannten Bereich des Bodens, vorhanden ist, wenn der von den Sondierungsbohrungen der Bohrungsanordnung aufgespannte Bereich des Bodens nicht in die erste Kategorie kategorisiert wurde, insbesondere wenn der von den Sondierungsbohrungen der Bohrungsanordnung aufgespannten Bereich des Bodens in die zweite Kategorie kategorisiert wurde.

Es wird also ein Verfahren vorgeschlagen, bei dem mehrere, bevorzugt drei, Sondierungsbohrungen, die eine Bohranordnung bilden, in einem Boden erzeugt werden. In jeder dieser Sondierungsbohrungen wird mittels mindestens eines Sensors eine physikalische Messung durchgeführt. Die auf Basis der Messung gewonnenen Messdaten werden mittels eines Algorithmus analysiert und der von den Sondierungsbohrungen der Bohrungsanordnung aufgespannte Bereich des Bodens wird mittels des Algorithmus, der zuvor mittels eines Trainings-Datensatzes trainiert wurde, kategorisiert. Dafür sind mindestens zwei Kategorien vorgesehen. Nach der ersten Kategorie deuten die entsprechenden Messdaten darauf hin, dass im von den Sondierungsbohrungen der Bohrungsanordnung aufgespannten Bereich des Bodens kein Verdachtsobjekt vorhanden ist. Nach der zweiten Kategorie deuten die entsprechenden Messdaten darauf hin, dass im von den Sondierungsbohrungen der Bohrungsanordnung aufgespannten Bereich des Bodens ein Verdachtsobjekt vorhanden ist. Wenn der von den Sondierungsbohrungen der Bohrungsanordnung aufgespannte Bereich des Bodens nicht in die erste Kategorie kategorisiert wurde, also beispielsweise wenn der von den Sondierungsbohrungen der Bohrungsanordnung aufgespannten Bereich des Bodens in die zweite Kategorie kategorisiert wurde, werden weiterführende Untersuchungen durchgeführt, um festzustellen, ob ein Verdachtsobjekt im Bereich der Bohrungsanordnung, insbesondere in dem von den Sondierungsbohrungen der Bohrungsanordnung aufgespannten Bereich des Bodens, vorhanden ist.

Ein Vorteil eines solchen Verfahrens besteht darin, dass anhand der Analyse der Messdaten und der Kategorisierung der Messdaten mittels des Algorithmus in relativ kurzer Zeit nach dem Erzeugen der Messdaten erkennbar ist, ob in einem bestimmten Bereich des Bodens ein Verdachtsobjekt vorhanden sein könnte oder nicht. Durch diese sehr schnelle und automatisierte Kategorisierung der Bodenbereiche, kann ein zu sondierender Boden sehr viel schneller vollständig nach Verdachtsobjekten abgesucht werden. Es ist dadurch auch möglich, unmittelbar nach dem Kategorisieren eines Bodenbereichs zu prüfen, ob der aufgespannte Bereich des Bodens nicht in die erste Kategorie kategorisiert wurde, und in einem solchen Fall unmittelbar weiterführende Untersuchungen durchzuführen.

Ein weiterer Vorteil besteht darin, dass aufgrund der unmittelbar und automatisiert erzeugten Kategorisierung ein Bearbeiter, der die Sondierungsbohrungen mittels einer dafür vorgesehenen Vorrichtung durchführt, unmittelbar auf potentiell gefährliche Bereiche - nämlich in Abhängigkeit der Kategorisierung - hingewiesen werden kann. Der Bearbeiter wird dann in die Lage versetzt, in und in der Nähe von solchen potentiell gefährlichen Bereichen weitere Bearbeitungsschritte mit besonders großer Sorgfalt durchzuführen, um Gefährdungen, insbesondere eine Explosionsgefahr, zu minimieren.

Der Boden, in dem das Verfahren durchgeführt wird, kann insbesondere ein Erdboden an Land oder ein Boden am Grund eines Gewässers sein.

Es ist bevorzugt, dass die Verfahrensschritte des Verfahrens in der angegebenen Reihenfolge ausgeführt werden. Vorzugsweise werden die Verfahrensschritte des Verfahrens mehrmals hintereinander für mehrere, insbesondere nebeneinander angeordnete Bohrlochanordnungen, durchgeführt, vorzugsweise bis ein zu untersuchender Boden vollständig nach Verdachtsobjekten abgesucht wurde.

Die mindestens drei, vorzugsweise genau drei, voneinander beabstandeten Sondierungsbohrungen bilden die Bohrungsanordnung. Wenn genau drei Sondierungsbohrungen vorgesehen sind, bilden diese eine Bohrungsanordnung in Form eines Bohrlochtripels. Die Sondierungsbohrungsachsen erstrecken sich vorzugsweise in vertikaler Richtung, es ist aber auch möglich, dass die Sondierungsbohrungsachsen etwas abweichend von der vertikalen Richtung ausgerichtet sind. Eine Bohrungsanordnung setzt sich vorzugsweise aus drei Sondierungsbohrungen zusammen. Eine Sondierungsbohrung kann auch mehreren Bohrungsanordnungen, insbesondere benachbarten Sondierungsbohrungen, zugeordnet sein. Allerdings müssen sich zwei Bohrungsanordnungen in mindestens einer Sondierungsbohrung unterscheiden, um nicht die gleiche Bohrungsanordnung zu sein.

Das Erzeugen von Messdaten und das Analysieren der Messdaten wird vorzugsweise mittels mindestens einer Datenverarbeitungseinheit, vorzugsweise mehrerer Datenverarbeitungseinheiten, durchgeführt. Die mindestens eine Datenverarbeitungseinheit ist vorzugsweise signaltechnisch mit dem mindestens einen Sensor verbunden, sodass die Sensordaten von dem mindestens einen Sensor an die mindestens eine Datenverarbeitungseinheit übertragen werden kann.

Die Messdaten, die der Bohrungsanordnung zugeordnet sind, werden mittels des auf Basis eines Trainings-Datensatzes trainierten Algorithmus analysiert. Unter einem auf Basis eines Trainings-Datensatzes trainierten Algorithmus ist insbesondere ein Künstliche-Intelligenz-Algorithmus zu verstehen, der mittels eines Trainings-Datensatzes trainiert wurde. Die Analyse der Messdaten und Kategorisierung des von den Sondierungsbohrungen der Bohrungsanordnung aufgespannten Bereichs des Bodens erfolgt somit insbesondere mithilfe eines solchen KI-Algorithmus.

Beispielhaft kann die Analyse und Kategorisierung wie folgt erfolgen: Die Datenlage innerhalb einer Bohrungsanordnung in Form eines Bohrlochtripels wird wie folgt mittels künstlicher Intelligenz vorkategorisiert. Ein sogenannter Random-Forest-Algorithmus wird mit ca. 80000 Bohrungsanordnungsdaten trainiert, was einer Bohrlochtripel-Anzahl von ca. 200000 entspricht, die zuvor in einem Boden erzeugt wurden. Dabei werden verschiedene Kennzahlen aus den einzelnen Komponenten der Messdaten ermittelt und gemeinsam mit den geometrischen Werten der einzelnen Sondierungsbohrungen und Bohrungsanordnungen als Datengrundlage verwendet. Die ursprüngliche Kategorisierung der Bohrungsanordnungen wurden zuvor von einer größeren Anzahl fachverständiger Personen durchgeführt, damit eine Objektivität der vorgenommenen Kategorisierung gewährleistet ist. Für die Kategorisierung bzw. Klassifizierung können beispielsweise drei Kategorien vorgesehen sein, die weiter unten als erste Kategorie, zweite Kategorie und dritte Kategorie erläutert werden. Diese Kategorisierung bzw. Klassifizierung dient dabei insbesondere dem Zweck, Flächen und/oder Bereiche des Bodens zu identifizieren, in denen ein Verdachtsobjekt, wie ein Blindgänger, nicht ausgeschlossen werden kann. In diesen Bereichen sind dann noch weitere Arbeitsschritte notwendig. Die Begriffe Kategorisierung und Klassifizierung werden in diesem Dokument synonym verwendet.

Alternativ oder ergänzend zur Verwendung eines Random-Forest-Algorithmus kann beispielsweise auch ein Autoencoder vorgesehen sein, der Kennwerte automatisiert sucht, wobei diese Kennwerte nicht zwingend einen direkten physikalischen Bezug haben müssen, aber vom verwendeten Algorithmus sehr effektiv nutzbar sind. Die vom Autoencoder ermittelten Kennwerte können dann beispielsweise in einen sogenannten XG-Boost Algorithmus als Datengrundlage eingegeben werden.

Das Kategorisieren des von den Sondierungsbohrungen der Bohrungsanordnung aufgespannten Bereichs des Bodens erfolgt in Abhängigkeit von den der Bohrungsanordnung zugeordneten Messdaten mittels des Algorithmus. Die mindestens zwei Kategorien umfassen: eine erste Kategorie und eine zweite Kategorie und gegebenenfalls eine dritte Kategorie. Vorzugsweise deuten bei einer Kategorisierung in die erste Kategorie die aus den Messdaten gewonnenen Kennzahlen darauf hin, dass kein Verdachtsobjekt, insbesondere kein Bombenblindgänger, innerhalb der Bohrungsanordnung vorhanden ist und/oder dass ein Verdachtsobjekt, insbesondere ein Bombenblindgänger, innerhalb der Bohrungsanordnung ausgeschlossen werden kann. Vorzugsweise deuten bei einer Kategorisierung in die zweite Kategorie die aus den Messdaten gewonnenen Kennzahlen darauf hin, dass ein Verdachtsobjekt, insbesondere ein Bombenblindgänger, innerhalb der Bohrungsanordnung vorhanden sein könnte und/oder dass ein Verdachtsobjekt, insbesondere ein Bombenblindgänger, innerhalb der Bohrungsanordnung nicht ausgeschlossen werden kann.

Das Durchführen weiterführender Untersuchungen erfolgt insbesondere dann im Bereich der Bohrungsanordnung, wenn der von den Sondierungsbohrungen der Bohrungsanordnung aufgespannte Bereich des Bodens nicht in die erste Kategorie kategorisiert wurde, wenn also nicht mittels der automatisierten Kategorisierung ausgeschlossen werden kann, dass ein Verdachtsobjekt, insbesondere ein Bombenblindgänger, innerhalb der Bohrungsanordnung vorhanden ist. Das Durchführen weiterführender Untersuchungen kann insbesondere das Erzeugen weiterer Sondierungsbohrungen im Bereich der Bohrungsanordnung, insbesondere innerhalb des von den Sondierungsbohrungen aufgespannten Bereiches, die der Bohrungsanordnung zugeordnet sind, umfassen.

Vorzugsweise ist eine Kategorisierung auch in verschiedenen Tiefen, insbesondere in vertikaler Richtung, möglich. Dadurch kann gegebenenfalls ermittelt werden, ob weiterführende Untersuchungen auf eine oder mehrere bestimmte Tiefenbereiche fokussiert werden sollen oder können. Mittels einer solchen tiefenabhängigen Analyse und Kategorisierung kann auf besonders vorteilhafte Weise erreicht werden, dass die weiterführenden Untersuchungen zielgerichtet in bestimmten Tiefen oder Tiefenbereichen durchgeführt werden. Auf diese Weise kann insbesondere der zeitliche Aufwand der weiterführenden Untersuchungen verringert werden.

Gemäß einer besonders bevorzugten Ausführungsform ist vorgesehen, dass das Kategorisieren mittels des Algorithmus in eine von mindestens drei Kategorien erfolgt, wobei die mindestens drei Kategorien umfassen: die erste Kategorie, die zweite Kategorie, und eine dritte Kategorie, nach welcher, insbesondere aufgrund von Störsignalen, eine Kategorisierung in die erste Kategorie oder in die zweite Kategorie nicht zuverlässig möglich ist.

Vorzugsweise deuten bei einer Kategorisierung in die dritte Kategorie die aus den Messdaten gewonnenen Kennzahlen nicht direkt auf ein Verdachtsobjekt, insbesondere einen Bombenblindgänger, innerhalb der Bohrungsanordnung hin, allerdings ist eine Kategorisierung in die erste oder zweite Kategorie nicht zuverlässig möglich, da die Messdaten beispielsweise so stark durch magnetische Störsignale überlagert sind, dass die Kennzahlen, die aus den Messdaten gewonnen werden, derart verfälscht sind oder nicht eindeutig von den Störsignalen unterscheidbar sind oder nicht eindeutig die Störsignalhöhe überschreiten, dass ein potentielles Verdachtsobjekt, insbesondere ein Bombenblindgänger, in der Bohrungsanordnung nicht zuverlässig erkannt werden würde.

Vorzugsweise erfolgt das Durchführen weiterführender Untersuchungen, um festzustellen, ob ein Verdachtsobjekt im von den Sondierungsbohrungen der Bohrungsanordnung aufgespannten Bereich des Bodens vorhanden ist, wenn der von den Sondierungsbohrungen der Bohrungsanordnung aufgespannte Bereich des Bodens nicht in die erste Kategorie kategorisiert wurde, insbesondere wenn der von den Sondierungsbohrungen der Bohrungsanordnung aufgespannte Bereich des Bodens in die zweite Kategorie oder in die dritte Kategorie kategorisiert wurde.

Es ist besonders bevorzugt, dass die Bohrungsanordnung genau drei Sondierungsbohrungen aufweist und die Sondierungsbohrungen der Bohrungsanordnung jeweils im Wesentlichen gleiche Abstände zueinander aufweisen oder sich die Abstände um höchstens 10 % voneinander unterscheiden, wobei vorzugsweise die Verbindungslinien zwischen den Sondierungsbohrungsachsen der Sondierungsbohrungen der Bohrungsanordnung in einer horizontalen Ebene ein gleichseitiges Dreieck aufspannen.

Es ist besonders bevorzugt, dass der Algorithmus ein Random-Forest-Algorithmus ist. Unter einem Random-Forest-Algorithmus ist insbesondere ein Algorithmus zu verstehen, der beim maschinellen Lernen eingesetzt wird und der als eine Ensemblemethode bezeichnet werden kann, die bei Klassifikations- und Regressionsverfahren eingesetzt wird. Beim Training eines solchen Algorithmus werden vorzugsweise mehrere möglichst unkorrelierte Entscheidungsbäume erzeugt. Dabei wird jeder Entscheidungsbaum mit einer anderen, zufällig ausgewählten Stichprobe der Trainingsdaten trainiert. Zusätzlich berücksichtigt jeder Baum für die Aufteilung der Objekte aus seiner Stichprobe an jedem Knoten nur eine zufällig gewählte Teilmenge aller Merkmale. Anschließend werden alle Bäume zu einem Ensemble, dem Random-Forest kombiniert.

Der Random-Forest-Algorithmus ist für diese Kategorisierung besonders vorteilhaft, da zum einen die Reduzierung auf Kennwerte keine gleichbleibende Datenstruktur der Messdaten verlangt und durch die interne Struktur ein "Overfitting" in stark verrauschten Messdaten verhindert bzw. minimiert wird.

Es ist besonders bevorzugt, dass eine Datenbank, in der Informationen zum Boden vorhanden sind (Geodatenbank) bereitgestellt wird, in welcher die Positionen der vorhandenen Sondierungsbohrungen der Bohrungsanordnung und zugeordnet die erzeugten Messdaten erfasst werden, wobei mittels einer Anzeigeeinrichtung die Positionen der vorhandenen Sondierungsbohrungen der Bohrungsanordnung auf einer Bodenkarte angezeigt werden, wobei die Bohrungsanordnung in Abhängigkeit von der für die Bohrungsanordnung erfolgten Kategorisierung markiert, insbesondere farbig markiert, angezeigt wird. Vorzugsweise sind in der Datenbank ferner Projektinformationen und/oder Randbedingungen des Bodens und/oder Luftbilder und/oder Schichtverzeichnisse des Bodens enthalten.

Es ist besonders bevorzugt, dass das Verfahren für eine Vielzahl von Sondierungsbohrungen, die auf einer zu untersuchenden Bodenfläche verteilt angeordnet sind, durchgeführt wird, wobei die Vielzahl von Sondierungsbohrungen vorzugsweise einer Vielzahl von Bohrungsanordnungen zugeordnet sind. Es ist insbesondere auch möglich, dass eine Sondierungsbohrung mehreren Bohrungsanordnungen zugeordnet ist. Dies kann insbesondere der Fall sein bei unmittelbar benachbart angeordneten Bohrungsanordnungen.

Es ist besonders bevorzugt, dass das Verfahren umfasst: automatisiertes Bestimmen eines Maximalbohrlochabstandes zwischen in den Boden einzubringenden geplanten Sondierungsbohrungen oder zwischen geplanten Sondierungsbohrungen und vorhandenen Sondierungsbohrungen, wobei Messdaten, die mittels mindestens eines Sensors in mindestens einer vorhandenen Sondierungsbohrung erzeugt wurden, analysiert werden und anhand der Messdaten ein Rauschsignal für die entsprechende vorhandene Sondierungsbohrung bestimmt wird, wobei der Maximalbohrlochabstand in Abhängigkeit von dem Rauschsignal bestimmt wird, wobei das Rauchsignal vorzugsweise mittels Anwenden eines Bandpassfilters auf die erzeugten Messdaten ermittelt wird. Dabei können die ungefilterten, bandpass- oder -hochpassgefilterten Messdaten zum Bestimmen verwendet werden. Aus den Messdaten kann über eine gewählte Tiefendistanz eine untere und eine obere Grenzwertlinie bestimmt werden. Aus der Differenz der beiden Grenzwertlinien, also der unteren und der oberen Grenzwertlinie, kann dann der Maximalbohrlochabstand bestimmt werden.

Unter einem Maximalbohrlochabstand ist insbesondere ein Bohrlochabstand, also ein Abstand zwischen den Sondierungsbohrungsachsen von zwei Sondierungsbohrungen, zu verstehen, der so groß ist, dass bei einem solchen Abstand gerade noch ermittelt werden kann, ob ein Verdachtsobjekt innerhalb der entsprechenden Bohrungsanordnung vorhanden sein könnte. Der Begriff des Maximalbohrlochabstandes gibt also an, wie groß der Bohrlochabstand maximal sein darf, damit eine Detektion von Verdachtsobjekten zwischen den entsprechenden Sondierungsbohrungen bzw. innerhalb der von den Sondierungsbohrungen aufgespannten Bereich des Bodens noch möglich ist. Unter einem Maximalbohrlochabstand ist vorzugsweise ein solcher Abstand zu verstehen, bei dem eine Kategorisierung in die erste oder zweite Kategorie für die entsprechende Bohrungsanordnung noch erfolgen kann.

Unter dem Rauschsignal ist insbesondere ein Signal eines unvermeidlichen Hintergrundrauschens, das mittels der Messung aufgenommen wird, zu verstehen. Das Rauschsignal gibt vorzugsweise den Anteil des Rauschens von dem Signal bzw. der Messung an. Das Signal-Rausch-Verhältnis ist vorzugsweise ein Maß für die technische Qualität der Messdaten. Vorzugsweise wird der Maximalbohrlochabstand in Abhängigkeit von dem Signal-Rausch-Verhältnis bestimmt.

Vorzugsweise umfasst das Verfahren: Anpassen, insbesondere automatisiertes Anpassen, eines neuen Bohrlochabstandes zwischen geplanten Sondierungsbohrungen oder zwischen geplanten Sondierungsbohrungen und vorhandenen Sondierungsbohrungen in Abhängigkeit von dem automatisiert bestimmten Maximalbohrlochabstand, wobei besonders bevorzugt der Bohrlochabstand zwischen den geplanten Sondierungsbohrungen oder zwischen geplanten Sondierungsbohrungen und vorhandenen Sondierungsbohrungen regelmäßig, bevorzugt mindestens täglich, aktualisiert wird in Abhängigkeit von den automatisiert bestimmten Maximalbohrlochabständen. Vorzugsweise wird der Bohrlochabstand zwischen den geplanten Sondierungsbohrungen oder zwischen geplanten Sondierungsbohrungen und vorhandenen Sondierungsbohrungen mindestens stündlich, besonders bevorzugt mindestens alle 30 Minuten, insbesondere in Echtzeit, also unmittelbar, aktualisiert in Abhängigkeit von den automatisiert bestimmten Maximalbohrlochabständen

Vorzugsweise wird der neue Bohrlochabstand mehrfach während der Untersuchung eines Bodens angepasst. Vorzugsweise werden dabei jeweils Messdaten, die durch Messung in der zuletzt erzeugten Sondierungsbohrung oder in mehreren der zuletzt erzeugten Sondierungsbohrungen gewonnen wurden, berücksichtigt. Dadurch kann auf besonders vorteilhafte Weise der Maximalbohrlochabstand ständig und unmittelbar nach Durchführung der Messungen aktualisiert werden. So können die Maximalbohrlochabstände in Abhängigkeit von den Messdaten, insbesondere in Abhängigkeit von dem ermittelten Signal-Rausch-Verhältnis, lokal bestimmt werden und die nächsten Sondierungsbohrungen können direkt mit einem solchen lokal angepassten Maximalbohrlochabstand erzeugt werden.

Ein Vorteil eines solchen Verfahrens besteht insbesondere darin, dass die Bohrlochabstandsbestimmung automatisiert bereits beim Einladen neuer Messdaten durchgeführt und visuell aufbereitet werden kann. Vorzugsweise wird dabei auf die Messdaten ein fester Bandpassfilter angewendet, aus dem wiederum mit Hilfe verschiedener Berechnungen von Medianen und Mittelwerten das allgemeine Rauchsignal einer jeden Sondierungsbohrung bestimmt werden kann.

Es ist besonders bevorzugt, dass der entsprechende Maximalbohrlochabstand automatisiert und unmittelbar, insbesondere innerhalb von höchstens 10 Minuten, vorzugsweise höchstens 5 Minuten, besonders bevorzugt höchstens eine Minute, insbesondere in Echtzeit, also unmittelbar, nach Erzeugen der Messdaten für die entsprechende vorhandene Sondierungsbohrung und/oder nach Erzeugen des Rauschsignals für die entsprechende vorhandene Sondierungsbohrung aktualisiert bestimmt wird.

Es ist besonders bevorzugt, dass für jede vorhandene Sondierungsbohrung in Abhängigkeit von dem der vorhandenen Sondierungsbohrung zugeordneten Maximalbohrlochabstand ein Detektionsradius ermittelt wird, der einen Kreis um die vorhandene Sondierungsbohrung bestimmt, in dem ein wirksames Detektieren von Verdachtsobjekten aufgrund der in dieser vorhandenen Sondierungsbohrung erzeugen Messdaten möglich ist.

Unter dem Detektionsradius ist insbesondere eine Art Wirkradius zu verstehen, der den Radius ausgehend von und orthogonal zur Sondierungsbohrungsachse der Sondierungsbohrung angibt, der eine Kreisfläche um die Sondierungsbohrungsachse definiert, in der eine Detektion von Verdachtsobjekten möglich ist.

Es ist besonders bevorzugt, dass eine Datenbank bereitgestellt wird, mittels welcher die vorhandenen Sondierungsbohrungen verknüpft werden, wobei mittels einer Anzeigeeinrichtung die Positionen der vorhandenen Sondierungsbohrungen auf einer Bodenkarte angezeigt werden, wobei der Kreis um die vorhandenen Sondierungsbohrungen markiert, insbesondere farbig markiert, angezeigt wird. Auf diese Weise erhält man eine visuelle Darstellung zum Abdeckung des Bodenbereiches und insbesondere zu möglicherwiese noch vorhandenen Lücken außerhalb von Detektionsradien umgebender Sondierungsbohrungen.

Vorzugsweise wird der Detektionsradius für die entsprechende vorhandene Sondierungsbohrung und der entsprechende Kreis um die vorhandene Sondierungsbohrung automatisiert und unmittelbar, insbesondere innerhalb von höchstens 10 Minuten, vorzugsweise höchstens 5 Minuten, besonders bevorzugt höchstens eine Minute, insbesondere in Echtzeit, also unmittelbar, nach Erzeugen der Messdaten für die vorhandene Sondierungsbohrung bestimmt, und vorzugsweise angezeigt.

Der Detektionsradius wird vorzugsweise sowohl farblich und in einer relativ zum Detektionsradius skalierten Größe auf der Anzeigeeinrichtung visuell dargestellt. Die Berechnung und Visualisierung kann dabei auch für verschiedene Tiefenbereiche, also für unterschiedliche Tiefen, insbesondere bezogen auf die Tiefe entlang der Sondierungsbohrungsachsen, durchgeführt werden. Dadurch kann auf besonders vorteilhafte Weise erreicht werden, dass problematische Bereiche sofort identifiziert werden können und das weitere Vorgehen der Sondierung kann schneller geplant werden. Eine solche Darstellung mittels der Anzeigeeinrichtung eignet sich vorzugsweise auch gut, um anhand der visuellen Darstellung die Ergebnisse der Sondierung mit fachfremden Personen zu besprechen.

Es ist besonders bevorzugt, dass das Verfahren umfasst: Erzeugen von weiteren Sondierungsbohrungen in dem Boden in einem Bereich, in welchem keine Abdeckung durch Kreise, die durch den Detektionsradius für die entsprechenden vorhandenen Sondierungsbohrungen definiert sind, vorhanden ist.

Vorzugsweise ist mindestens ein Detektionsradius mindestens einer vorhandenen Sondierungsbohrung kleiner verglichen mit Detektionsradien von vorhandenen Sondierungsbohrungen in anderen benachbarten Bereichen des Bodens.

Es ist besonders bevorzugt, dass das Durchführen mindestens einer physikalischen Messung zumindest für einige der Sondierungsbohrungen, vorzugsweise für alle der Sondierungsbohrungen, das Durchführen einer elektromagnetischen Messung und einer magnetischen Messung, und vorzugsweise einer Radarmessung, umfasst.

Es ist dabei auch möglich und bevorzugt, dass mittels mehrerer physikalischer Messungen erzeugte Daten kombiniert ausgewertet werden.

Vorzugsweise erfolgt da Durchführen mindestens einer physikalischen Messung zumindest für einige Sondierungsbohrungen, vorzugsweise für alle der Sondierungsbohrungen, mittels eines passiven Verfahrens. Passive Verfahren beruhen auf der Messung von Verzerrungen des Erdmagnetfeldes, die durch magnetisch wirksame Störkörper, wie Blindgänger, Eisenteile etc., im Untergrund hervorgerufen werden. Dafür verwendete Magnetometer sind hochempfindliche Messsysteme, die in der Lage sind, Störungen des Erdmagnetfeldes infolge ferromagnetischer Minerale und ferromagnetischer Objekte anzuzeigen. Bei der Suche nach Verdachtsobjekten, insbesondere Kampfmitteln, in größeren Tiefen oder in oberflächlich gestörten Bereichen können Magnetometer in Verbindung mit Aufnahme- und Auswertesystemen zur Bohrlochsondierung verwendet werden.

Vorzugsweise erfolgt da Durchführen mindestens einer physikalischen Messung zumindest für einige Sondierungsbohrungen, vorzugsweise für alle der Sondierungsbohrungen, mittels eines aktiven Verfahrens. Bei aktiven Verfahren wird ein elektromagnetisches Feld mittels eines Senders erzeugt, dessen Antwort aus dem Untergrund durch elektrisch leitfähige Strukturen wie z. B. Metallkörper verändert wird. Diese Änderungen werden mittels eines Empfängers aufgenommen und ausgewertet. Das in diesem Zusammenhang einsetzbare Pulsinduktionsverfahren basiert auf der Grundlage der Induktion von Wirbelströmen in einem elektrisch leitfähigen Störkörper.

Es ist besonders bevorzugt, dass für alle Sondierungsbohrungen eine magnetische Messung und für ausgewählte Sondierungsbohrungen zusätzlich eine elektromagnetische Messung durchgeführt wird, insbesondere für solche Sondierungsbohrungen, bei denen der von den Sondierungsbohrungen der Bohrungsanordnung aufgespannte Bereich des Bodens, zu denen die Sondierungsbohrungen gehören, nicht in die erste Kategorie kategorisiert wurde.

Das Durchführen mindestens einer physikalischen Messung zumindest für einige der Sondierungsbohrungen erfolgt vorzugsweise mittels magnetischer Messung, wobei bevorzugt zusätzlich für einige ausgewählte oder alle Sondierungsbohrungen zusätzlich eine elektromagnetische Messung durchgeführt wird.

Das Verwenden zwei verschiedener Messverfahren, nämlich magnetische Messung kombiniert mit elektromagnetischer Messung, hat den Vorteil, dass Verdachtsobjekte noch besser und zuverlässiger detektiert werden können. Dies gilt insbesondere für Bombenblindgänger, die magnetisch und leitfähig sind.

Es ist besonders bevorzugt, dass die mittels der magnetischen Messung erzeugten Messdaten und die mittels der elektromagnetischen Messung erzeugten Messdaten bei dem Kategorisieren des Bodens im Bereich der entsprechenden Bohrungsanordnung und/oder bei dem automatisierten Bestimmen eines Maximalbohrlochabstandes berücksichtigt werden.

Es ist besonders bevorzugt, dass eine Sondierungsbohrung als Simulation digital erzeugt wird und simulierte Messdaten für die als Simulation erzeugte Sondierungsbohrung erzeugt werden in Abhängigkeit von Messdaten, die für vorhandene reale Sondierungsbohrungen erzeugt wurden, die benachbart zu der als Simulation erzeugten Sondierungsbohrung angeordnet sind.

Vorzugsweise wird mittels dem Verfahren eine Planung von Sondierungsbohrungen vorgenommen. Vorzugsweise werden Zusatzbohrungen in kritischen Bereichen simuliert. Dabei wird vorzugsweise das Signal der umliegenden Sondierungsbohrungen gewichtet genutzt, um das Rauschlevel der geplanten Sondierungsbohrung zu simulieren. Aus einem solchen simulierten Signal ergibt sich ein Detektionsradius, welcher nach einer Gleichung aus der Bestimmung des Abstandes zwischen den Sondierungsbohrungen berechnet wird. So lässt sich vorzugsweise grafisch abschätzen, wie viele zusätzliche Sondierungsbohrungen in einem gewählten Bereich nötig sind um die Bodenfläche abzudecken. Dies geschieht vorzugsweise rechnerisch und kann manuell basierend auf der grafischen Darstellung angepasst und/oder geändert werden. Vorzugsweise wird ein Optimierungsalgorithmus verwendet, der eine möglichst effektive Anzahl und Positionen von Bohrlöchern ermittelt, um die zuvor nicht abgedeckten Bereiche auszufüllen. Vorzugsweise ist danach noch eine händische Anpassung möglich.

Vorzugsweise werden in Abhängigkeit von den simulierten Messdaten zusätzliche Sondierungsbohrungen geplant und/oder erzeugt. Vorzugsweise werden dabei insbesondere in solchen Bereichen des Bodens zusätzliche Sondierungsbohrungen geplant und/oder erzeugt, in denen die Detektionsradien benachbarter Sondierungsbohrungen nicht überlappen.

Es ist besonders bevorzugt, dass ein Verdachtsobjekt als Simulation digital erzeugt wird und anschließend geprüft wird, ob die benachbart zu dem als Simulation erzeugten Verdachtsobjekt angeordneten vorhandenen realen Sondierungsbohrungen nah genug an dem als Simulation erzeugten Verdachtsobjekt liegen, um ein potentielles Verdachtsobjekt an der Position des als Simulation erzeugten Verdachtsobjekts erkennen zu können.

Vorzugsweise werden in Abhängigkeit von dem Ergebnis dieser Prüfung zusätzliche Sondierungsbohrungen, die näher an dem als Simulation erzeugten Verdachtsobjekt angeordnet sind als die bereits vorhandenen Sondierungsbohrungen, geplant und/oder erzeugt.

Gemäß einem weiteren Aspekt der Erfindung wird die eingangs genannte Aufgabe gelöst durch ein System zum Detektieren von Verdachtsobjekten, insbesondere Kampfmitteln, in einem Boden, wobei das System vorzugsweise ausgebildet ist, um ein wie hier beschriebenes Verfahren auszuführen, das System umfassend eine Vorrichtung zum Erzeugen von Sondierungsbohrungen und zum Durchführen von Messungen in Sondierungsbohrungen, wobei die Vorrichtung ausgebildet ist, um folgende Schritte auszuführen: Erzeugen von mindestens drei, insbesondere genau drei, voneinander beabstandeten Sondierungsbohrungen in einem Boden, wobei die mindestens drei Sondierungsbohrungen eine Bohrungsanordnung, vorzugsweise ein Bohrlochtripel, bilden, wobei vorzugsweise die mindestens drei Sondierungsbohrungen der Bohrungsanordnung jeweils eine Sondierungsbohrungsachse aufweisen, die parallel zueinander angeordnet sind und/oder vertikal ausgerichtet sind; Durchführen mindestens einer physikalischen Messung innerhalb jeder der mindestens drei Sondierungsbohrungen der Bohrungsanordnung mittels mindestens eines Sensors; Erzeugen von Messdaten anhand der durchgeführten mindestens einen physikalischen Messung für jede der mindestens drei Sondierungsbohrungen der Bohrungsanordnung; ein Datenverarbeitungssystem, das ausgebildet ist, um folgende Schritte auszuführen: Analysieren der Messdaten, die der Bohrungsanordnung zugeordnet sind, mittels eines auf Basis eines Training-Datensatzes trainierten Algorithmus zur Kategorisierung eines von den Sondierungsbohrungen der Bohrungsanordnung aufgespannte Bereich des Bodens; Kategorisieren des Bodens im Bereich der Bohrungsanordnung in Abhängigkeit von den der Bohrungsanordnung zugeordneten Messdaten mittels des Algorithmus in eine von mindestens zwei Kategorien, wobei die mindestens zwei Kategorien umfassen: eine erste Kategorie, nach welcher die Messdaten darauf hindeuten, dass kein Verdachtsobjekt im von den Sondierungsbohrungen der Bohrungsanordnung aufgespannten Bereich des Bodens vorhanden ist; eine zweite Kategorie, nach welcher die Messdaten darauf hindeuten, dass ein Verdachtsobjekt im von den Sondierungsbohrungen der Bohrungsanordnung aufgespannten Bereich des Bodens vorhanden ist.

Das System ist vorzugsweise ausgebildet, um weiterführende Untersuchungen durchzuführen, um festzustellen, ob ein Verdachtsobjekt im von den Sondierungsbohrungen der Bohrungsanordnung aufgespannten Bereich des Bodens vorhanden ist, wenn der Boden im Bereich der Bohrungsanordnung nicht in die erste Kategorie kategorisiert wurde, insbesondere wenn der Boden im Bereich der Bohrungsanordnung in die zweite Kategorie kategorisiert wurde.

Gemäß einem weiteren Aspekt der Erfindung wird die eingangs genannte Aufgabe gelöst durch eine Verwendung eines wie hier beschriebenen Systems zum Detektieren von Verdachtsobjekten, insbesondere Kampfmitteln, in einem Boden.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine schematische Darstellung eines Verfahrens zum Detektieren von Verdachtsobjekten, insbesondere von Kampfmitteln, in einem Boden;
- Fig. 2:: eine schematische Seitenansicht einer Vorrichtung zum Erzeugen von Sondierungsbohrungen in einem Boden und zum Detektieren von Verdachtsobjekten;
- Fig. 3:: eine schematische Darstellung einer Bohrungsanordnung in Form eines Bohrlochtripels;
- Fig. 4:: eine erste beispielhafte Darstellung einer Anzeigeeinrichtung;
- Fig. 5:: eine zweite beispielhafte Darstellung einer Anzeigeeinrichtung.

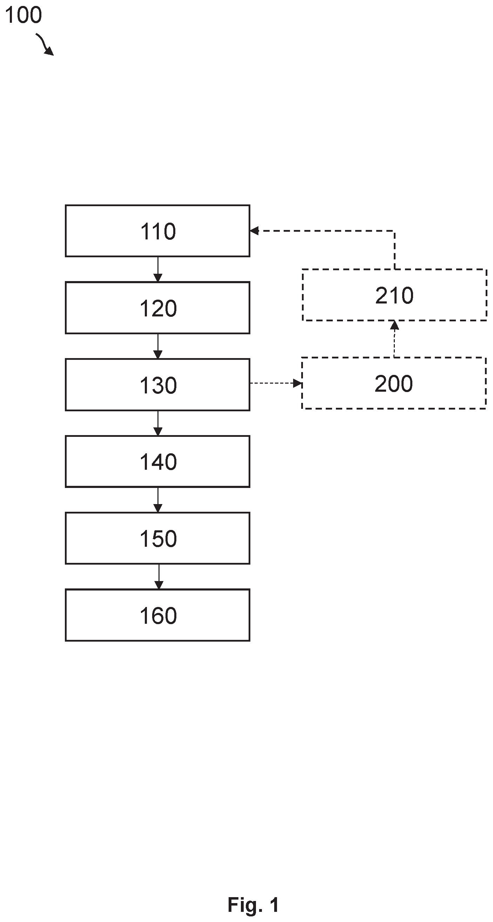

Fig. 1 zeigt eine schematische Darstellung eines Verfahrens 100 zum Detektieren von Verdachtsobjekten, insbesondere von Kampfmitteln, in einem Boden Das Verfahren umfasst folgende Schritte:

In einem Schritt 110, Erzeugen von mindestens drei, insbesondere genau drei, voneinander beabstandeten Sondierungsbohrungen in einem Boden, wobei die mindestens drei Sondierungsbohrungen eine Bohrungsanordnung, vorzugsweise ein Bohrlochtripel, bilden, wobei vorzugsweise die mindestens drei Sondierungsbohrungen der Bohrungsanordnung jeweils eine Sondierungsbohrungsachse S aufweisen, die parallel zueinander angeordnet sind und/oder vertikal ausgerichtet sind.

In einem Schritt 120, Durchführen mindestens einer physikalischen Messung innerhalb jeder der mindestens drei Sondierungsbohrungen der Bohrungsanordnung mittels mindestens eines Sensors.

In einem Schritt 130, Erzeugen von Messdaten anhand der durchgeführten mindestens einen physikalischen Messung für jede der mindestens drei Sondierungsbohrungen der Bohrungsanordnung.

In einem Schritt 140, Analysieren der Messdaten, die der Bohrungsanordnung zugeordnet sind, mittels eines auf Basis eines Trainings-Datensatzes trainierten Algorithmus zur Kategorisierung eines von den Sondierungsbohrungen der Bohrungsanordnung aufgespannten Bereichs des Bodens.

In einem Schritt 150, Kategorisieren des von den Sondierungsbohrungen der Bohrungsanordnung aufgespannten Bereichs des Bodens in Abhängigkeit von den der Bohrungsanordnung zugeordneten Messdaten mittels des Algorithmus in eine von mindestens zwei Kategorien, wobei die mindestens zwei Kategorien umfassen: eine erste Kategorie, nach welcher die Messdaten darauf hindeuten, dass kein Verdachtsobjekt im von den Sondierungsbohrungen der Bohrungsanordnung aufgespannten Bereich des Bodens vorhanden ist; eine zweite Kategorie, nach welcher die Messdaten darauf hindeuten, dass ein Verdachtsobjekt von den Sondierungsbohrungen der Bohrungsanordnung aufgespannten Bereich des Bodens vorhanden ist.

In einem Schritt 160, Durchführen weiterführender Untersuchungen, um festzustellen, ob ein Verdachtsobjekt im Bereich der Bohrungsanordnung, insbesondere in dem von den Sondierungsbohrungen der Bohrungsanordnung aufgespannten Bereich des Bodens, vorhanden ist, wenn der von den Sondierungsbohrungen der Bohrungsanordnung aufgespannte Bereich des Bodens nicht in die erste Kategorie kategorisiert wurde, insbesondere wenn der von den Sondierungsbohrungen der Bohrungsanordnung aufgespannten Bereich des Bodens in die zweite Kategorie kategorisiert wurde.

Vorzugsweise umfasst das Verfahren außerdem die folgenden Schritte, die insbesondere nach Schritt 130 durchgeführt werden können:
In einem Schritt 200, automatisiertes Bestimmen eines Maximalbohrlochabstandes zwischen in den Boden einzubringenden geplanten Sondierungsbohrungen oder zwischen geplanten Sondierungsbohrungen und vorhandenen Sondierungsbohrungen, wobei Messdaten, die mittels mindestens eines Sensors in mindestens einer vorhandenen Sondierungsbohrung erzeugt wurden, analysiert werden und anhand der Messdaten ein Rauschsignal für die entsprechende vorhandene Sondierungsbohrung bestimmt wird, wobei der Maximalbohrlochabstand in Abhängigkeit von dem Rauschsignal bestimmt wird, wobei das Rauchsignal vorzugsweise mittels Anwenden eines Bandpassfilters auf die erzeugten Messdaten ermittelt wird.

In einem Schritt 210, Anpassen, insbesondere automatisiertes Anpassen eines neuen Bohrlochabstandes zwischen geplanten Sondierungsbohrungen oder zwischen geplanten Sondierungsbohrungen und vorhandenen Sondierungsbohrungen in Abhängigkeit von dem automatisiert bestimmten Maximalbohrlochabstand, wobei besonders bevorzugt der Bohrlochabstand zwischen den geplanten Sondierungsbohrungen oder zwischen geplanten Sondierungsbohrungen und vorhandenen Sondierungsbohrungen regelmäßig, bevorzugt mindestens täglich, aktualisiert wird in Abhängigkeit von den automatisiert bestimmten Maximalbohrlochabständen.

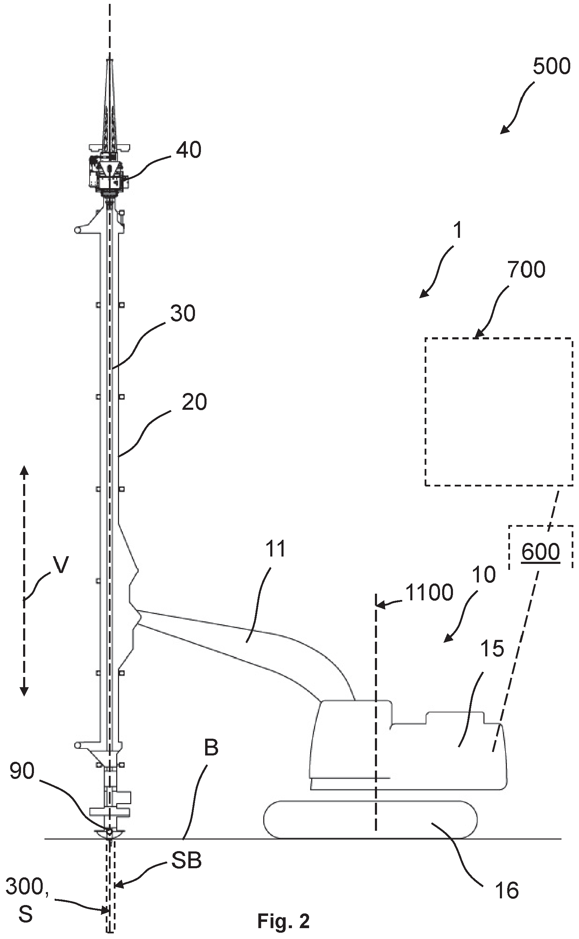

Fig. 2 zeigt ein System 500 zum Detektieren von Verdachtsobjekten, insbesondere Kampfmitteln, in einem Boden. Das System 500 weist eine Vorrichtung 1 zum Erzeugen von Sondierungsbohrungen SB in einem Boden B und zum Detektieren von Verdachtsobjekten, insbesondere Kampfmitteln, in dem Boden B auf.

Die Vorrichtung 1 umfasst ein Trägergerät 10. Das Trägergerät 10 ist im gezeigten Beispiel als Baumaschine in Form eines Raupenbaggers ausgebildet. Das Trägergerät 10 weist einen Antrieb 15 und Fortbewegungsmittel 16 auf. Außerdem weist das Trägergerät 10 einen Ausleger 11 auf, der mit einer Bohreraufnahmeanordnung 20 verbunden ist. Der Ausleger 11 ist um die Auslegerdrehachse 1100, die vertikal, also in vertikaler Richtung V, angeordnet ist, drehbar. Dadurch ist auch die Bohreraufnahmeanordnung 20 um die Auslegerdrehachse 1100 drehbar.

Die Vorrichtung 1 umfasst ferner einen Bohrer 30, der eine vertikal ausgerichtete Bohrerlängsachse 300 aufweist. Der Bohrer 30 ist mit der Bohreraufnahmeanordnung 20 verbunden und an der Bohreraufnahmeanordnung 20 in Richtung der Bohrerlängsachse 300 axial bewegbar und ferner um die Bohrerlängsachse 300 drehbar gelagert. Ein Bohrmotor 40 ist vorgesehen, der mit dem Bohrer 30 verbunden ist und ausgebildet ist, um den Bohrer 30 anzutreiben zum Erzeugen einer Sondierungsbohrungen SB mit einer vertikal angeordneten Sondierungsbohrungsachse S in dem Boden B mittels des Bohrers 30.

Die Vorrichtung 1 weist ferner ein Sondiergestänge auf (in Fig. 2 nicht sichtbar), das wie in den nachfolgend gezeigten Figuren ausgebildet und angeordnet sein kann. An dem Sondiergestänge ist ein Sensor 90 angeordnet, der in die Sondierungsbohrung SB eingelassen werden kann, um innerhalb der Sondierungsbohrung SB mindestens eine physikalische Messung durchzuführen, sodass dann anhand dieser Messungen Messdaten erzeugt werden können.

Es wird ferner eine Datenbank 700, die auch als Geodatenbank bezeichnet werden kann, bereitgestellt, mittels welcher die vorhandenen Sondierungsbohrungen verknüpft werden. In der Datenbank 700 werden die Positionen der vorhandenen Sondierungsbohrungen der Bohrungsanordnung und zugeordnet die erzeugten Messdaten erfasst. Mittels einer Anzeigeeinrichtung 600 können die Positionen der vorhandenen Sondierungsbohrungen auf einer Bodenkarte angezeigt werden, wobei die Bohrungsanordnung in Abhängigkeit von der für die Bohrungsanordnung erfolgten Kategorisierung markiert, insbesondere farbig markiert, angezeigt werden kann.

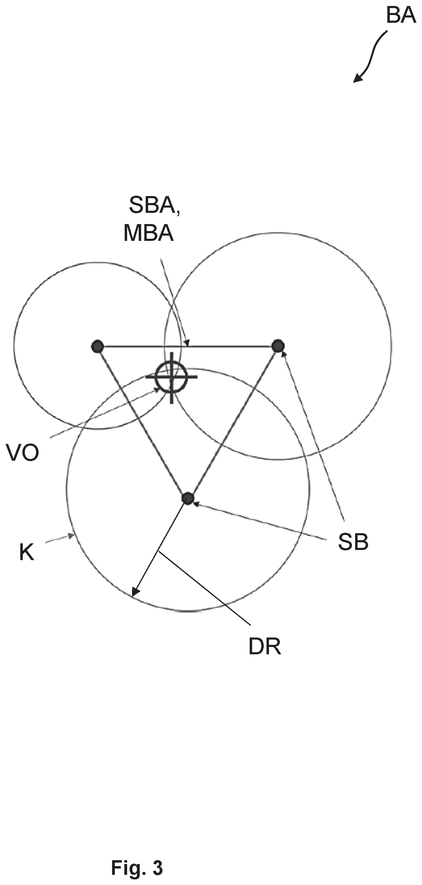

Fig. 3 zeigt eine schematische Darstellung einer Bohrungsanordnung BA in Form eines Bohrlochtripels. Es sind drei Sondierungsbohrungen SB vorgesehen die in der Draufsicht mit ihren Verbindungslinien, die dem Bohrlochabstand SBA, der auch als Sondierungsbohrungsabstand bezeichnet werden kann, entsprechen, ein gleichseitiges Dreieck bilden. Der Detektionsradius DR ist für die unten gezeigte Sondierungsbohrung SB angegeben. Mittels des Detektionsradius DR wird der Kreis K definiert, der den Bereich um die Sondierungsbohrung SB definiert, in dem eine Detektion von Verdachtsobjekten möglich ist. Mit VO ist die Position eines Verdachtsobjekts eingezeichnet, das mittels der in den Sondierungsbohrungen SB erzeugten Messdaten erkannt wurde.

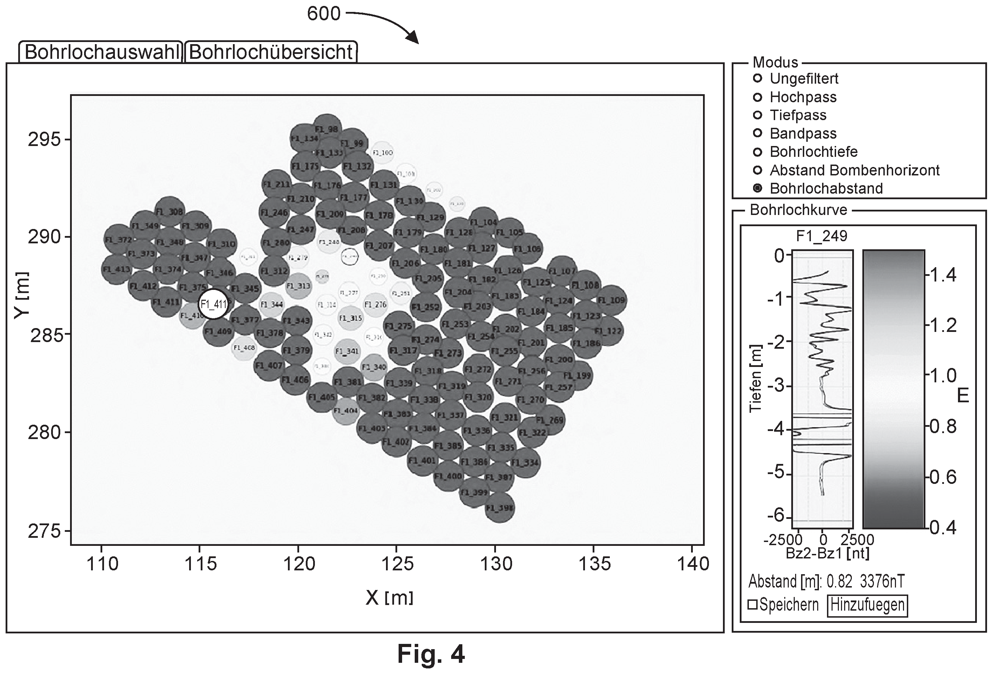

Fig. 4 zeigt eine erste beispielhafte Darstellung einer Anzeigeeinrichtung 600. Mittels der Anzeigeeinrichtung 600 können die Positionen der vorhandenen Sondierungsbohrungen auf einer Bodenkarte angezeigt werden, wobei die Bohrungsanordnungen in Abhängigkeit von der für die Bohrungsanordnungen erfolgten Kategorisierung markiert, insbesondere farbig markiert, angezeigt werden. Die Detektionsradien werden in Fig. 4 sowohl farblich, als mit einer Größe die einer skalierten Größe des ermittelten Detektionsradius entspricht, angezeigt. Die Berechnung und Visualisierung kann für verschiedene Tiefenbereiche durchgeführt werden. In grün sind die Sondierungsbohrungen gezeigt, die einen ausreichend großen Detektionsradius aufweisen, um den entsprechenden Bereich abzudecken. In gelb, orange und rot sind jeweils Sondierungsbohrungen mit relativ kleinem Detektionsradius gezeigt. In diesen Bereichen sind die Detektionsradien nicht groß genug, um den entsprechenden Bereich mit den von den Detektionsradien definierten Kreisen abzudecken. Mittels einer solchen Ansicht können unmittelbar problematische Bereiche identifizieren werden und es können weitergehenden Untersuchungen in den problematischen Bereichen durchgeführt werden.

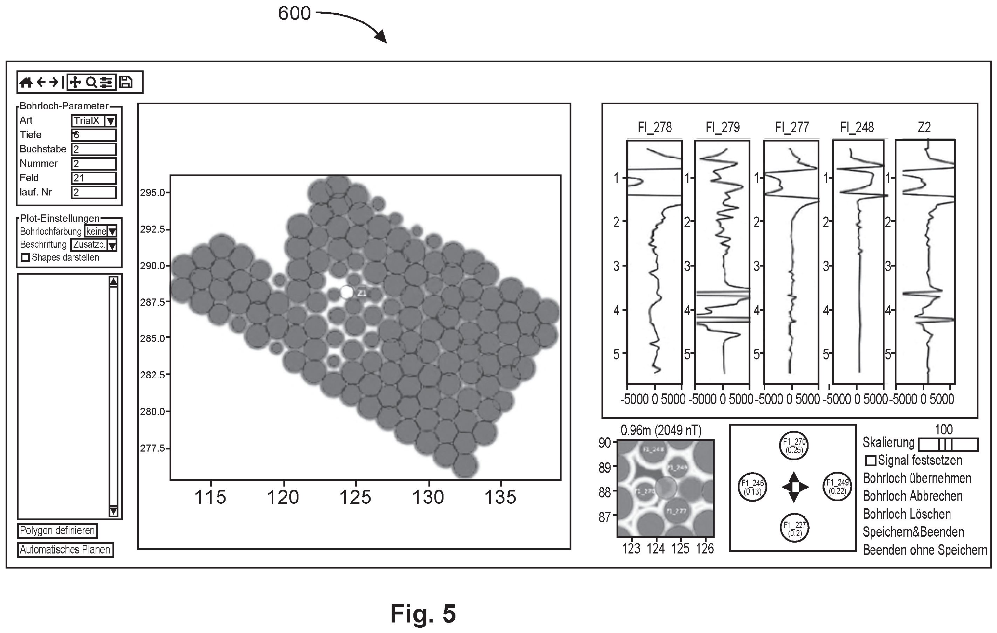

Fig. 5 zeigt eine zweite beispielhafte Darstellung einer Anzeigeeinrichtung 600. Die in Fig. 5 gezeigte Ansicht dient der Planung neuer Sondierungsbohrungen. Dazu können weitere Sondierungsbohrungen in kritischen Bereichen simuliert werden. Dabei wird das Signal der aus den umliegenden Sondierungsbohrungen gewonnenen Messungen gewichtet genutzt um das Rauschlevel der geplanten Sondierungsbohrung zu simulieren. Die Gewichtungen können ebenso manuell angepasst werden. Aus dem simulierten Signal ergibt sich ein Einflussradius, welcher nach einer Formel der Bohrlochabstandsbestimmung berechnet wird. So lässt sich vorzugsweise erst rechnerisch und dann grafisch abschätzen, wie viele zusätzliche Bohrlöcher in einem gewählten Bereich nötig sind um die Fläche nach der Bohrlochabstandsbestimmung abzudecken. Das ist auch für verschiedene Tiefenbereiche möglich. Mittels einer solchen Planung zusätzlicher Sondierungsbohrungen ist es auch möglich, einen vorher festgelegten Bereich automatisch mit geplanten Sondierungsbohrungen zu füllen. Dazu kann beispielsweise über einen iterativen Ansatz mit verschiedenen Überschneidungsgrenzwerten der gewählte Bereich mit einer möglichst geringen Anzahl an Bohrungen gefüllt und nahezu vollständig abgedeckt werden, wie in der Ansicht in Fig. 5 dargestellt.

### Bezugszeichenliste

- 1: Vorrichtung
- 10: Trägergerät
- 11: Ausleger
- 15: Antrieb
- 16: Fortbewegungsmittel
- 20: Bohreraufnahmeanordnung
- 30: Bohrer
- 40: Bohrmotor
- 90: Sensor
- 100: Verfahren zum Detektieren von Verdachtsobjekten, insbesondere Kampfmitteln, in einem Boden
- 110-210: Verfahrensschritte
- 300: Bohrerlängsachse
- 500: System zum Detektieren von Verdachtsobjekten, insbesondere Kampfmitteln, in einem Boden
- 600: Anzeigeeinrichtung
- 700: Datenbank
- 1100: Auslegerdrehachse
- B: Boden
- BA: Bohrungsanordnung
- DR: Detektionsradius
- K: Kreis
- S: Sondierungsbohrungsachse
- SB: Sondierungsbohrungen
- SBA: Bohrlochabstand, Sondierungsbohrungsabstand
- MBA: Maximalbohrlochabstand
- V: vertikale Richtung
- VO: Verdachtsobjekt

## Patentansprüche

1. Verfahren (100) zum Detektieren von Verdachtsobjekten, insbesondere von Kampfmitteln, in einem Boden (B), das Verfahren umfassend:
- Erzeugen (110) von mindestens drei, insbesondere genau drei, voneinander beabstandeten Sondierungsbohrungen (SB) in einem Boden (B), wobei die mindestens drei Sondierungsbohrungen (SB) eine Bohrungsanordnung (BA), vorzugsweise ein Bohrlochtripel, bilden, wobei vorzugsweise die mindestens drei Sondierungsbohrungen (SB) der Bohrungsanordnung (BA) jeweils eine Sondierungsbohrungsachse (S) aufweisen, die parallel zueinander angeordnet sind und/oder vertikal ausgerichtet sind;
- Durchführen (120) mindestens einer physikalischen Messung innerhalb jeder der mindestens drei Sondierungsbohrungen (SB) der Bohrungsanordnung (BA) mittels mindestens eines Sensors (90);
- Erzeugen (130) von Messdaten anhand der durchgeführten mindestens einen physikalischen Messung für jede der mindestens drei Sondierungsbohrungen (SB) der Bohrungsanordnung (BA);
- Analysieren (140) der Messdaten, die der Bohrungsanordnung (BA) zugeordnet sind, mittels eines auf Basis eines Trainings-Datensatzes trainierten Algorithmus zur Kategorisierung eines von den Sondierungsbohrungen (SB) der Bohrungsanordnung (BA) aufgespannten Bereichs des Bodens (B);
- Kategorisieren (150) des von den Sondierungsbohrungen (SB) der Bohrungsanordnung (BA) aufgespannten Bereichs des Bodens (B) in Abhängigkeit von den der Bohrungsanordnung (BA) zugeordneten Messdaten mittels des Algorithmus in eine von mindestens zwei Kategorien, wobei die mindestens zwei Kategorien umfassen:
o eine erste Kategorie, nach welcher die Messdaten darauf hindeuten, dass kein Verdachtsobjekt im von den Sondierungsbohrungen der Bohrungsanordnung aufgespannten Bereich des Bodens vorhanden ist;
∘ eine zweite Kategorie, nach welcher die Messdaten darauf hindeuten, dass ein Verdachtsobjekt von den Sondierungsbohrungen der Bohrungsanordnung aufgespannten Bereich des Bodens vorhanden ist;
- Durchführen (160) weiterführender Untersuchungen, um festzustellen, ob ein Verdachtsobjekt (VO) im Bereich der Bohrungsanordnung (BA), insbesondere in dem von den Sondierungsbohrungen (SB) der Bohrungsanordnung (BA) aufgespannten Bereich des Bodens (B), vorhanden ist, wenn der von den Sondierungsbohrungen (SB) der Bohrungsanordnung (BA) aufgespannte Bereich des Bodens (B) nicht in die erste Kategorie kategorisiert wurde, insbesondere wenn der von den Sondierungsbohrungen (SB) der Bohrungsanordnung (BA) aufgespannten Bereich des Bodens (B) in die zweite Kategorie kategorisiert wurde.

2. Verfahren nach Anspruch 1, wobei das Kategorisieren (150) mittels des Algorithmus in eine von mindestens drei Kategorien erfolgt, wobei die mindestens drei Kategorien umfassen:
∘ die erste Kategorie,
∘ die zweite Kategorie, und
∘ eine dritte Kategorie, nach welcher, insbesondere aufgrund von Störsignalen, eine Kategorisierung in die erste Kategorie oder in die zweite Kategorie nicht möglich ist,
wobei vorzugsweise das Durchführen (160) weiterführender Untersuchungen, um festzustellen, ob ein Verdachtsobjekt (VO) im von den Sondierungsbohrungen (SB) der Bohrungsanordnung (BA) aufgespannten Bereich des Bodens (B) vorhanden ist, erfolgt, wenn der von den Sondierungsbohrungen (SB) der Bohrungsanordnung (BA) aufgespannte Bereich des Bodens (B) nicht in die erste Kategorie kategorisiert wurde, insbesondere wenn der von den Sondierungsbohrungen (SB) der Bohrungsanordnung (BA) aufgespannte Bereich des Bodens (B) in die zweite Kategorie oder in die dritte Kategorie kategorisiert wurde.

3. Verfahren nach einem der vorhergehenden Ansprüche,
wobei die Bohrungsanordnung (BA) genau drei Sondierungsbohrungen (SB) aufweist und die Sondierungsbohrungen (SB) der Bohrungsanordnung (BA) jeweils im Wesentlichen gleiche Abstände zueinander aufweisen oder sich die Abstände um höchstens 10 % voneinander unterscheiden, wobei vorzugsweise die Verbindungslinien zwischen den Sondierungsbohrungsachsen (S) der Sondierungsbohrungen (SB) der Bohrungsanordnung (BA) in einer horizontalen Ebene ein gleichseitiges Dreieck aufspannen.

4. Verfahren nach einem der vorhergehenden Ansprüche, wobei der Algorithmus ein Random-Forest-Algorithmus ist.

5. Verfahren nach einem der vorhergehenden Ansprüche, wobei eine Datenbank, in der Informationen zum Boden (B) vorhanden sind (Geodatenbank) bereitgestellt wird, in welcher die Positionen der vorhandenen Sondierungsbohrungen (SB) der Bohrungsanordnung (BA) und zugeordnet die erzeugten Messdaten erfasst werden, wobei mittels einer Anzeigeeinrichtung (600) die Positionen der vorhandenen Sondierungsbohrungen (SB) der Bohrungsanordnung (BA) auf einer Bodenkarte angezeigt werden, wobei die Bohrungsanordnung (BA) in Abhängigkeit von der für die Bohrungsanordnung (BA) erfolgten Kategorisierung markiert, insbesondere farbig markiert, angezeigt wird, und/oder
wobei das Verfahren für eine Vielzahl von Sondierungsbohrungen (SB), die auf einer zu untersuchenden Bodenfläche verteilt angeordnet sind, durchgeführt wird, wobei die Vielzahl von Sondierungsbohrungen (SB) vorzugsweise einer Vielzahl von Bohrungsanordnungen (BA) zugeordnet sind.

6. Verfahren nach einem der vorhergehenden Ansprüche, das Verfahren umfassend:
- automatisiertes Bestimmen (200) eines Maximalbohrlochabstandes (MBA) zwischen in den (B) Boden einzubringenden geplanten Sondierungsbohrungen (SB) oder zwischen geplanten Sondierungsbohrungen (SB) und vorhandenen Sondierungsbohrungen (SB), wobei Messdaten, die mittels mindestens eines Sensors (90) in mindestens einer vorhandenen Sondierungsbohrung (SB) erzeugt wurden, analysiert werden und anhand der Messdaten ein Rauschsignal für die entsprechende vorhandene Sondierungsbohrung (SB) bestimmt wird, wobei der Maximalbohrlochabstand (MBA) in Abhängigkeit von dem Rauschsignal bestimmt wird, wobei das Rauchsignal vorzugsweise mittels Anwenden eines Bandpassfilters auf die erzeugten Messdaten ermittelt wird,
- und vorzugsweise Anpassen (210), insbesondere automatisiertes Anpassen eines neuen Bohrlochabstandes (SBA) zwischen geplanten Sondierungsbohrungen (SB) oder zwischen geplanten Sondierungsbohrungen (SB) und vorhandenen Sondierungsbohrungen (SB) in Abhängigkeit von dem automatisiert bestimmten Maximalbohrlochabstand (MBA), wobei besonders bevorzugt der Bohrlochabstand (SBA) zwischen den geplanten Sondierungsbohrungen (SB) oder zwischen geplanten Sondierungsbohrungen (SB) und vorhandenen Sondierungsbohrungen (SB) regelmäßig, bevorzugt mindestens täglich, aktualisiert wird in Abhängigkeit von den automatisiert bestimmten Maximalbohrlochabständen (MBA).

7. Verfahren nach Anspruch 6, wobei der entsprechende Maximalbohrlochabstand (MBA) automatisiert und unmittelbar, insbesondere innerhalb von höchstens 10 Minuten, vorzugsweise höchstens 5 Minuten, besonders bevorzugt höchstens eine Minute, insbesondere in Echtzeit, also unmittelbar, nach Erzeugen der Messdaten für die entsprechende vorhandene Sondierungsbohrung (SB) und/oder nach Erzeugen des Rauschsignals für die entsprechende vorhandene Sondierungsbohrung (SB) aktualisiert bestimmt wird.

8. Verfahren nach einem der Ansprüche 6-7, wobei für jede vorhandene Sondierungsbohrung (SB) in Abhängigkeit von dem der vorhandenen Sondierungsbohrung (SB) zugeordneten Maximalbohrlochabstand (MBA) ein Detektionsradius (DR) ermittelt wird, der einen Kreis (K) um die vorhandene Sondierungsbohrung (SB) bestimmt, in dem ein wirksames Detektieren von Verdachtsobjekten (VO) aufgrund der in dieser vorhandenen Sondierungsbohrung (SB) erzeugen Messdaten möglich ist.

9. Verfahren nach Anspruch 8, wobei eine Datenbank (700) bereitgestellt wird, mittels welcher die vorhandenen Sondierungsbohrungen (SB) verknüpft werden, wobei mittels einer Anzeigeeinrichtung (600) die Positionen der vorhandenen Sondierungsbohrungen (SB) auf einer Bodenkarte angezeigt werden, wobei der Kreis (K) um die vorhandenen Sondierungsbohrungen (SB) markiert, insbesondere farbig markiert, angezeigt wird,
wobei vorzugsweise der Detektionsradius (DR) für die entsprechende vorhandene Sondierungsbohrung (SB) und der entsprechende Kreis (K) um die vorhandene Sondierungsbohrung (SB) automatisiert und unmittelbar, insbesondere innerhalb von höchstens 10 Minuten, vorzugsweise höchstens 5 Minuten, besonders bevorzugt höchstens eine Minute, insbesondere in Echtzeit, also unmittelbar, nach Erzeugen der Messdaten für die vorhandene Sondierungsbohrung (SB) bestimmt, und vorzugsweise angezeigt, wird.

10. Verfahren nach Anspruch 9, das Verfahren umfassend:
- Erzeugen (110) von weiteren Sondierungsbohrungen (SB) in dem Boden (B) in einem Bereich, in welchem keine Abdeckung durch Kreise (K), die durch den Detektionsradius (DR) für die entsprechenden vorhandenen Sondierungsbohrungen (SB) definiert sind, vorhanden ist.

11. Verfahren nach einem der vorhergehenden Ansprüche, wobei das Durchführen mindestens einer physikalischen Messung zumindest für einige der Sondierungsbohrungen (SB), vorzugsweise für alle der Sondierungsbohrungen (SB), das Durchführen einer elektromagnetischen Messung und einer magnetischen Messung, und vorzugsweise einer Radarmessung, umfasst, und/oder wobei für alle Sondierungsbohrungen (SB) eine magnetische Messung und für ausgewählte Sondierungsbohrungen (SB) zusätzlich eine elektromagnetische Messung durchgeführt wird, insbesondere für solche Sondierungsbohrungen (SB), bei denen der von den Sondierungsbohrungen (SB) der Bohrungsanordnung (BA) aufgespannte Bereich des Bodens (B), zu denen die Sondierungsbohrungen (SB) gehören, nicht in die erste Kategorie kategorisiert wurde,
wobei vorzugsweise die mittels der magnetischen Messung erzeugten Messdaten und die mittels der elektromagnetischen Messung erzeugten Messdaten bei dem Kategorisieren (150) des Bodens im Bereich der entsprechenden Bohrungsanordnung (BA) und/oder bei dem automatisierten Bestimmen (200) eines Maximalbohrlochabstandes (MBA) berücksichtigt werden.

12. Verfahren nach einem der vorhergehenden Ansprüche, wobei eine Sondierungsbohrung (SB) als Simulation digital erzeugt wird und simulierte Messdaten für die als Simulation erzeugte Sondierungsbohrung (SB) erzeugt werden in Abhängigkeit von Messdaten, die für vorhandene reale Sondierungsbohrungen (SB) erzeugt wurden, die benachbart zu der als Simulation erzeugten Sondierungsbohrung (SB) angeordnet sind,
wobei vorzugsweise in Abhängigkeit von den simulierten Messdaten zusätzliche Sondierungsbohrungen (SB) geplant und/oder erzeugt werden.

13. Verfahren nach einem der vorhergehenden Ansprüche, wobei ein Verdachtsobjekt (VO) als Simulation digital erzeugt wird und anschließend geprüft wird, ob die benachbart zu dem als Simulation erzeugten Verdachtsobjekt (VO) angeordneten vorhandenen realen Sondierungsbohrungen (SB) nah genug an dem als Simulation erzeugten Verdachtsobjekt (VO) liegen, um ein potentielles Verdachtsobjekt (VO) an der Position des als Simulation erzeugten Verdachtsobjekts (VO) erkennen zu können, wobei vorzugsweise in Abhängigkeit von dem Ergebnis dieser Prüfung zusätzliche Sondierungsbohrungen (SB), die näher an dem als Simulation erzeugten Verdachtsobjekt (VO) angeordnet sind als die bereits vorhandenen Sondierungsbohrungen (SB), geplant und/oder erzeugt werden.

14. System (500) zum Detektieren von Verdachtsobjekten, insbesondere Kampfmitteln, in einem Boden (B), wobei das System vorzugsweise ausgebildet ist, um ein Verfahren (100) nach einem der vorhergehenden Ansprüche auszuführen, das System umfassend
- eine Vorrichtung (1) zum Erzeugen von Sondierungsbohrungen (SB) und zum Durchführen von Messungen in Sondierungsbohrungen (SB), wobei die Vorrichtung (1) ausgebildet ist, um folgende Schritte auszuführen:
o Erzeugen (110) von mindestens drei, insbesondere genau drei, voneinander beabstandeten Sondierungsbohrungen (SB) in einem Boden (B), wobei die mindestens drei Sondierungsbohrungen (SB) eine Bohrungsanordnung (BA), vorzugsweise ein Bohrlochtripel, bilden, wobei vorzugsweise die mindestens drei Sondierungsbohrungen (SB) der Bohrungsanordnung (BA) jeweils eine Sondierungsbohrungsachse (S) aufweisen, die parallel zueinander angeordnet sind und/oder vertikal ausgerichtet sind;
∘ Durchführen (120) mindestens einer physikalischen Messung innerhalb jeder der mindestens drei Sondierungsbohrungen (SB) der Bohrungsanordnung (BA) mittels mindestens eines Sensors;
∘ Erzeugen (130) von Messdaten anhand der durchgeführten mindestens einen physikalischen Messung für jede der mindestens drei Sondierungsbohrungen (SB) der Bohrungsanordnung (BA);
- ein Datenverarbeitungssystem, das ausgebildet ist, um folgende Schritte auszuführen:
o Analysieren (140) der Messdaten, die der Bohrungsanordnung (BA) zugeordnet sind, mittels eines auf Basis eines Training-Datensatzes trainierten Algorithmus zur Kategorisierung eines von den Sondierungsbohrungen (SB) der Bohrungsanordnung (BA) aufgespannte Bereich des Bodens;
∘ Kategorisieren (150) des Bodens im Bereich der Bohrungsanordnung (BA) in Abhängigkeit von den der Bohrungsanordnung (BA) zugeordneten Messdaten mittels des Algorithmus in eine von mindestens zwei Kategorien, wobei die mindestens zwei Kategorien umfassen:
▪ eine erste Kategorie, nach welcher die Messdaten darauf hindeuten, dass kein Verdachtsobjekt (VO) im von den Sondierungsbohrungen (SB) der Bohrungsanordnung (BA) aufgespannten Bereich des Bodens (B) vorhanden ist;
▪ eine zweite Kategorie, nach welcher die Messdaten darauf hindeuten, dass ein Verdachtsobjekt (VO) im von den Sondierungsbohrungen (SB) der Bohrungsanordnung (BA) aufgespannten Bereich des Bodens (B) vorhanden ist;
wobei das System vorzugsweise ausgebildet ist, um weiterführende Untersuchungen durchzuführen, um festzustellen, ob ein Verdachtsobjekt (VO) im von den Sondierungsbohrungen (SB) der Bohrungsanordnung (BA) aufgespannten Bereich des Bodens (B) vorhanden ist, wenn der Boden (B) im Bereich der Bohrungsanordnung (BA) nicht in die erste Kategorie kategorisiert wurde, insbesondere wenn der Boden im Bereich der Bohrungsanordnung in die zweite Kategorie kategorisiert wurde.

15. Verwendung eines Systems nach dem vorhergehenden Anspruch zum Detektieren von Verdachtsobjekten (VO), insbesondere Kampfmitteln, in einem Boden (B).
